# EUROPÄISCHE PATENTSCHRIFT

(11) **EP 3 882 109 B1**
(45) Veröffentlichungstag und Bekanntmachung des Hinweises auf die Patenterteilung: **31.07.2024**
(21) Anmeldenummer: 21000079.0
(22) Anmeldetag: 20.03.2021
(51) Int. Cl.: B62D 21/18, B60P 1/00, B60P 7/08, B62D 33/04

(54) **AUSSENRAHMENPROFIL FÜR EINEN AUSSENRAHMEN FÜR EIN NUTZFAHRZEUG**
OUTER FRAME PROFILE FOR AN OUTER FRAME FOR A COMMERCIAL VEHICLE
PROFILÉ DE CHÂSSIS EXTÉRIEUR POUR UN CHÂSSIS EXTÉRIEUR POUR UN VÉHICULE UTILITAIRE

(30) Priorität: 20.03.2020 DE 102020107823
(43) Veröffentlichungstag der Anmeldung: 22.09.2021
(73) Patentinhaber: Schmitz, Peter, 48341 Altenberge (DE)
(72) Erfinder: Schmitz, Peter, 48341 Altenberge (DE)
(74) Vertreter: Steffen, Andreas

(56) Entgegenhaltungen:
- EP-A1- 2 708 450
- DE-A1- 10 163 360
- DE-A1- 19 706 493

## Beschreibung

Die vorliegende Erfindung betrifft ein Außenrahmenprofil für einen Außenrahmen für ein Nutzfahrzeug, insbesondere für ein Chassis eines Nutzfahrzeuges, welches aus wenigstens einem Rahmenprofil aus zumindest drei Profilteilen mit gleicher oder unterschiedlicher Wandstärke gebildet ist, mit einem ersten Profilteil, das zumindest abschnittsweise die Außenseite des Außenrahmens bildet, mit zumindest einem vorderen Rahmenabschnitt und zumindest einem hinteren Rahmenabschnitt, wobei an dem vorderen Rahmenabschnitt ein zweites Profilteil mit einer niedrigen Höhe zumindest abschnittweise an dem ersten Profilteil derart anliegt, und wobei an dem hinteren Rahmenabschnitt ein drittes Profilteil mit einer zu dem zweiten Profilteil höheren Aufbauhöhe zumindest abschnittweise an dem ersten Profilteil derart anliegt, dass unterschiedliche Unterbauhöhen in Längserstreckung des Rahmenprofils ausgebildet sind, nach dem Oberbegriff von Anspruch 1.

Aus der DE102014103156A1 ist ein Nutzfahrzeugaufbau bekannt, insbesondere ein Schiebeplanenaufbau, mit wenigstens einer seitlichen Runge, die sich zwischen einem Dach und einem Boden des Nutzfahrzeugaufbaus erstreckt, und einer Seitenplane, die in einem Schließzustand über die Runge gespannt ist. Das untere Längsende der Runge ist außen an einem Außenrahmen des Nutzfahrzeugaufbaus befestigt.

Die DE19706493A1 betrifft Aufbauten für Lkw-Zugfahrzeuge, Zugkabelanhänger, Zentralachsanhänger und Sattelanhänger.

Die EP 2 708 450 A1 offenbart einen Außenrahmen und dessen Herstellung eines Chassis für ein Lastfahrzeug. Der Außenrahmen umfasst ein Hauptprofil und bei Bedarf ein Ergänzungsprofil, das an dem Außenrahmen befestigt werden kann. Das Ergänzungsprofil wird bei einem Planenaufbau zusätzlich benötigt, und kann je nach Höhe seiner Montage am Hauptprofil nur die Funktion des Einhängens von Planenspannern haben oder zusätzlich auch durch das Aufragen über das Hauptprofil nach oben die Funktion als Anfahrschutz für Paletten dienen. Das Hauptprofil hat eine spezifische Querschnittsgestaltung und in regelmäßigen Abständen vorhandene Durchbrüche , sodass sowohl in den Durchbrüchen fest positionierte Zurrhaken als auch im Abstand in Längsrichtung verschiebbare Zurradapter einsetzbar sind.

Schließlich betrifft die DE 101 63 360 A1 eine Laderaumkonstruktion für einen Boxtrailer und ein Verfahren für deren Zusammenbau. Die Laderaumkonstruktion besteht aus Wandelementen, einem Dachelement und einem Fußbodenelement. Die zuvor genannten Elemente sind an deren Ecken durch eine an der jeweiligen Ecke des Laderaumes vorgesehenen Profilteilkonstruktion miteinander verbunden. Die Profilteilkonstruktion weist ein erstes Profilteil und ein zweites Profilteil auf, welche mit dem Dachelement oder dem Fußbodenelement verbunden werden können. Die aus Fußbodenelement und Profilteilkonstruktion gebildete Konstruktion ist zur Ausbildung der erfindungsgemäßen Ladekonstruktion über das zweite Profilteil der Profilteilkonstruktion mit dem Wandelement verbunden.

Bei den bekannten Nutzfahrzeugaufbauten ist nachteilig, dass diese spezielle Ausgestaltungen von Außenrahmen benötigen, um unterschiedliche Aufbauten ausbilden zu können. Bei den für die bekannten Nutzfahrzeugaufbauten verwendeten Außenrahmenstrukturen ist zudem nachteilig, dass diese in unterschiedlich beanspruchten Bereichen stets die gleiche Wandstärke aufweisen. Für die Ladungssicherung durch den Außenrahmen durchgeführte Zurr- oder Verzurrhaken verursachen beispielsweise bei unzureichender Wandstärke des Außenrahmenprofils bei Zugbelastung Verformungen des Außenrahmens.

### Offenbarung der Erfindung

Aufgabe der Erfindung ist es, die aus dem Stand der Technik bekannten Nutzfahrzeugaufbauten zumindest teilweise zu verbessern. Insbesondere ist es die Aufgabe der vorliegenden Erfindung einen Außenrahmen derart auszugestalten, dass dieser in besonders beanspruchten Bereichen formstabil bleibt.

Die voranstehende Aufgabe wird durch ein Außenrahmenprofil für einen Au-ßenrahmen für ein Nutzfahrzeug, insbesondere für ein Chassis eines Nutzfahrzeuges mit den Merkmalen des Anspruchs 1, durch einen Außenrahmen, umfassend das erfindungsgemäße Außenrahmenprofil mit den Merkmalen des Anspruchs 11 sowie durch ein Chassis für einen Nutzfahrzeugaufbau, umfassend den erfindungsgemäßen Außenrahmen mit den Merkmalen des Anspruchs 12 gelöst. Weitere Vorteile, Merkmale und Details der Erfindung ergeben sich aus den Unteransprüchen, der Beschreibung und den Zeichnungen. Dabei gelten Merkmale und Details, die im Zusammenhang mit dem erfindungsgemäßen Außenrahmenprofil beschrieben sind, selbstverständlich auch im Zusammenhang mit dem erfindungsgemäßen Außenrahmen und dem erfindungsgemäßen Chassis und jeweils umgekehrt, so dass bezüglich der Offenbarung zu den einzelnen Erfindungsaspekten stets wechselseitig Bezug genommen wird, bzw. werden kann.

Das erfindungsgemäße Außenrahmenprofil für einen Außenrahmen für ein Nutzfahrzeug, insbesondere für ein Chassis eines Nutzfahrzeuges, welches aus wenigstens einem Rahmenprofil aus zumindest drei Profilteilen mit gleicher oder unterschiedlicher Wandstärke gebildet ist, mit einem ersten Profilteil, das zumindest abschnittsweise die Außenseite des Außenrahmens bildet, mit zumindest einem vorderen Rahmenabschnitt und zumindest einem hinteren Rahmenabschnitt, wobei an dem vorderen Rahmenabschnitt ein zweites Profilteil mit einer niedrigen Höhe zumindest abschnittweise an dem ersten Profilteil derart anliegt, und wobei an dem hinteren Rahmenabschnitt ein drittes Profilteil mit einer zu dem zweiten Profilteil höheren Aufbauhöhe zumindest abschnittweise an dem ersten Profilteil derart anliegt, dass unterschiedliche Unterbauhöhen in Längserstreckung des Rahmenprofils ausgebildet sind, schließt die technische Lehre ein, dass in den Abschnitten, in denen das zweite Profilteil und das dritte Profilteil an dem ersten Profilteil anliegen, sich die Wandstärke des ersten Profilteils mit der Wandstärke des zweiten Profilteils und/oder der Wandstärke des dritten Profilteils addiert.

Im Sinne der vorliegenden Erfindung soll als "Außenrahmen" ein den Ladeboden eines Nutzfahrzeuges zumindest abschnittsweise umgrenzender Rahmen verstanden werden. Entsprechend ist das in dieser Anmeldung offenbarte Außenrahmenprofil als ein erster Rahmenabschnitt des Außenrahmens zu verstehen, welches in Längserstreckung auf einer Seite des Nutzfahrzeuges ausgebildet ist und das spiegelsymmetrisch auch auf der anderen Seite des Nutzfahrzeuges als zweiter Rahmenabschnitt des Außenrahmens ausgebildet ist, das mit den gleichen oder zu dem anderen Außenrahmenprofil unterschiedlichen Funktionen ausgestaltet ist.

Als "Addierung der Wandstärken" soll im Sinne der vorliegenden Erfindung eine abschnittsweise Verstärkung der Wand des Rahmenprofils in den Bereichen, in denen das erste Profilteil mit einem weiteren daran anliegenden Profilteil "hinterfüttert" ist, verstanden werden. Diese bereichsweise Ausgestaltung dient auch insgesamt zur strukturellen Stabilisierung bzw. zur Versteifung des ersten Profilteils und somit insgesamt zur Ausbildung eines stabilen und multifunktionellen Außenrahmens.

Im Sinne der vorliegenden Erfindung soll als "Nutzfahrzeug" insbesondere ein Trailer, wie beispielsweise ein Curtainsider, ein Mega-Curtainsider oder auch ein Trailer mit Kofferaufbau verstanden werden, wobei im Fall eines Planenaufbaus Rungen als vertikale Verstrebungen zwischen dem Dach des Trailers und dem Ladeboden des Trailers dienen oder im Falle eines Kofferaufbaus sich Paneele auf dem Außenrahmen abstützen und mit diesem verbunden sind.

Im Gegensatz zu den bekannten Außenrahmen, die aus einem Profil mit durchgehend gleicher Wandstärke ausgebildet sind, sind die beispielsweise durch Zugbelastung bei der Ladungssicherung stark belasteten Bereiche des die Außenseite des erfindungsgemäßen Außenrahmenprofilteils bildenden Profilteils durch die Hinterlegung zumindest eines weiteren Rahmenprofilteils verstärkt. Dadurch addieren sich erfindungsgemäß die Wandstärken der aneinander liegenden Profilteile. Zudem kann durch die Ausgestaltung eines Rahmenprofils aus zumindest drei Profilteilen bei einem durchgehenden ersten Profilteil, welches die Außenseite des Außenrahmens bzw. des Außenrahmenprofils bildet, das erste Profilteil unverändert für verschiedene Nutzfahrzeugaufbauten und insbesondere vorteilhaft ohne eine Ausbildung einer Stufe im Übergang vom hinteren Bereich zum vorderen Bereich des Außenrahmens ausgestaltet werden. Durch das Anlegen und die Verbindung des ersten Profilteils mit einem zweiten Profilteil kann ein vorderer Bereich des erfindungsgemäßen Außenrahmens mit einer geringeren Höhe im Vergleich zu einer höheren Höhe im hinteren Bereich des Außenrahmens durch das Anlegen und die Verbindung mit einem für den hinteren Bereich des Außenrahmens ausgebildeten dritten Rahmenprofilteil ausgestaltet werden. Die Anforderungen für die unterschiedlichen Höhen im vorderen und im hinteren Bereich des Außenrahmens, die sich aus den Funktionen eines Chassis für einen Nutzfahrzeugaufbau ergeben, wirken sich dabei erfindungsgemäß nicht auf die Architektur des die Außenseite des Außenrahmen bildenden ersten Profilteils aus. Der stufenlos ausgebildete Außenrahmen bildet dabei erfindungsgemäß einen Systemanschluss für Kofferpaneele als auch für Planenaufbauten.

Aus dem Stand der Technik sind für die Außenrahmenprofile Wandstärken von 3 mm bis 4 mm bekannt. Bei den Profilen handelt es sich in üblicher Weise um Strangpressprofile oder um zusammengeschweißte Profilteile, um einen vorderen und einen hinteren Bereich des Außenrahmens auszugestalten. Dadurch entsteht im Fahrgestellkröpfungsbereich bei gleichbleibender Wandstärke der aneinandergefügten Profilteile eine Stufe zwischen dem hinteren und dem vorderen Bereich des Außenrahmens.

In vorteilhafter Weise wird durch das Anlegen die Verbindung des zweiten und des dritten Profilteils an das erste Profilteil bei gleicher Wandstärke für das erste Profilteil, das zweite Profilteil und das dritte Profilteil das Rahmenprofil in den Abschnitten, in denen das zweite Profilteil und das dritte Profilteil an dem ersten Profilteil anliegen, die Wandstärke des den Außenrahmen bildenden Rahmenprofils verdoppelt.

Vorzugsweise wird die erhöhte oder verstärkte Wandstärke, insbesondere die Materialdopplung, in Abschnitten des Rahmenprofils ausgebildet, in denen Öffnungen für Befestigungselemente vorgesehen sind. Die Öffnungen dienen vorteilhaft zum Ein- bzw. Durchgriff von Zurrhaken oder zum Einlassen von Zurrösen für eine Ladungssicherung mittels Spanngurten. Die Spanngurte sind in üblicher Weise als 2 Tonnengurte und bis zu 4 Tonnengurte ausgelegt. Die Wandstärke für die Profilteile des Rahmenprofils für den erfindungsgemäßen Außenrahmen liegt vorteilhaft zwischen 1,5 mm bis 5 mm, bevorzugt zwischen 2 mm bis 4 mm und besonders bevorzugt weisen die Profilteile für den erfindungsgemäßen Außenrahmen eine Wandstärke von 2 mm auf. Bei Doppelung der Wandstärke ergibt sich in den besonders belasteten Bereichen des Außenrahmens dadurch eine Wandstärke von 4 mm, was gegenüber den bekannten Wandstärken von 3 mm eine Bördelung durch Zug über die Spanngurte bei der Ladungssicherung wirkungsvoll verhindert. Zudem sind die Profilteile vorzugsweise aus einem Material mit hochfester Materialgüte ausgebildet, was sich zusätzlich vorteilhaft auf die Stabilität des erfindungsgemäßen Außenrahmenprofils ausübt. Vorteilhaft wirkt die verstärkte Wandstärke, insbesondere in dem zum Fahrzeugboden hin liegenden Schulterbereich des erfindungsgemäßen Außenrahmenprofils, einem Abbiegen oder Verbiegen des Profils bei Druckbelastung auf den Fahrzeugboden, beispielsweise durch Befahren mit einem Stapler oder bei Beförderung von Transportgut, entgegen.

Wie bereits beschrieben, ist das erste Profilteil in Längserstreckung des Rahmenprofils mit einer gleichbleibenden Höhe stufenlos ausgebildet, wobei das erfindungsgemäße Außenrahmenprofil erfindungsgemäß eine vordere und eine hintere Höhe aufweist. Daraus ergibt sich vorteilhaft, dass Kofferpaneele oder eine Plane mit gleichbleibender Höhe für einen Nutzfahrzeugaufbau ausgestaltet werden können. Die Ausgestaltung der aus dem Stand der Technik bekannten Kofferpaneele mit unterschiedlicher Bauhöhe oder die an eine Stufe im Außenrahmen angepasste Plane entfällt vorteilhaft bei der erfindungsgemäßen stufenlosen Ausgestaltung des aus zumindest drei Profilteilen zusammengesetzten erfindungsgemäßen Rahmenprofils für einen Außenrahmen.

Soll als Nutzfahrzeug ein Standardtrailer ausgestaltet werden kann das erfindungsgemäße Außenrahmenprofil auch nur aus zwei Profilteilen gebildet werden, nämlich dem ersten und dem zweiten Profilteil, welche dann gemeinsam den hinteren Bereich und den vorderen Bereich des Außenrahmenprofils für den Außenrahmen bilden. Aufgrund der Abmessungen der Fahrzeugräder, die bei Standardtrailern eingesetzt werden ist eine unterschiedliche Unterbauhöhe zwischen dem vorderen und dem hinteren Bereich des Nutzfahrzeuges nicht notwendig. Die für das erfindungsgemäße Außenrahmenprofil genannten Funktionen und Eigenschaften bleiben auch für diese besondere Konstruktion aus nur zwei Profilteilen für den Bau von Standardtrailern erhalten.

Vorzugsweise ist das erste Profilteil des erfindungsgemäßen Rahmenprofils für den Außenrahmen als ein Profil, das durchlaufend ist, ausgebildet. Demgegenüber sind zur Ausgestaltung eines vorderen und eines hinteren Bereiches das zweite Profilteil und das dritte Profilteil an das erste Profilteil angelegt und mit diesem verbunden, wobei das zweite Profilteil vorzugsweise einmal gestoßen ist, nämlich an dem dritten Profilteil stirnseitig an diesem anliegt. Zur Verbindung zwischen dem zweiten und dem dritten Profilteil dient vorteilhaft zumindest ein Verbindungelement, das vorteilhaft zumindest abschnittsweise in Längserstreckung des Rahmenprofils an dem zweiten Profilteil und dem dritten Profilteil zur Anlage gebracht werden kann. Die Verbindung zwischen dem Verbindungselement und dem zweiten Profilteil kann als zumindest kraft- und/oder form- und/oder stoffschlüssige Verbindung ausgeführt werden. Vorzugsweise werden die zuvor genannten Teile miteinander verklebt, verschweißt, verschraubt, vernietet oder geclincht. Der Stoß zwischen dem dritten und dem zweiten Profilteil liegt vorteilhaft im oder hinter dem Fahrgestellkröpfungsbereichs bzw. im Bereich von Stützwinden des Nutzfahrzeugaufbaus.

In vorteilhafter Weise weist das erste Profilteil zumindest abschnittsweise eine Umformung in Form einer Hinterschneidung oder eines Hinterschnitts auf. Die Hinterschneidung dient vorteilhaft als Bodenauflage, nämlich zur Aufnahme von Bodenpaneelen. Die in die Hinterschneidung eingeführten Bodenpaneele werden vorzugsweise mit dem ersten Rahmenprofilteil verklebt und bilden insgesamt über die Längserstreckung mehrerer an dem erfindungsgemäßen Außenrahmen verklebter Bodenpaneele eine Scheibe, die vorteilhaft die Fahreigenschaften des mit dem erfindungsgemäßen Außenrahmen aufgebauten Nutzfahrzeuges gegenüber den bekannten Nutzfahrzeugen verbessern.

Vorzugsweise weist das dritte Profilteil eine parallel zur Längserstreckung des Rahmenprofils ausgebildete Umformung an einem orthogonal zur Längserstreckung des dritten Profilteils liegenden nach unten weisenden Schenkel auf. Die Umformung erfolgt vorteilhaft in Form einer U-förmigen Verformung. Neben stabilisierenden Eigenschaften, nämlich zu unterseitigen Versteifung des dritten Profils, dient die Umformung vorteilhaft auch als Befestigungsaufnahme, vorteilhaft in Form einer Klemmung durch Zusammenführen der beiden Schenkel der U-förmigen Verformung. Neben der beispielhaften Befestigung von Anbauteilen wie beispielsweise eine Seitenbeleuchtung, ein Spritzschutz, vorteilhaft im hinteren Bereich des Außenrahmens, ein Werkzeugkasten und/oder ein Unterfahrschutz, kann die Umformung an dem nach unten weisenden Schenkel auch als Leitungsbahn zum Verlegen von elektrischen oder fluidtechnischen Verbindungen verwendet werden. Die Befestigung der Anbauteile an dem Profilteil kann auch mittels Befestigungselementen, wie beispielsweise Schrauben oder Nieten, erfolgen.

In vorteilhafter Weise weist das erste Profilteil eine parallel zur Längserstreckung des Rahmenprofils ausgebildete Umformung an einem orthogonal zur Längserstreckung des ersten Profilteils liegenden nach unten weisenden Schenkel auf. Die Umformung ist vorzugsweise in Form einer nach oben hin sich verjüngenden Öse oder vorteilhaft in Form eines Schäkels ausgebildet. Insbesondere ist die untere Kante des Schenkels in Form einer Abrundung ausgestaltet. Die Umformung mit der Abrundung dient vorteilhaft zum einen zur unterseitigen Versteifung des nach unten weisenden Schenkels des ersten Profils und zum anderen wird durch die Abrundung die Ausbildung einer Schnittkante vermieden. Bei Planenaufbauten dient die Umformung vorteilhaft zur Umlage einer Plane und der Befestigung der Plane mittels eines an der Umformung angreifenden Planenspanners. Die um die Umformung umgelegte Plane in Verbindung mit dem an der Umformung angreifenden Planenspanners ermöglicht in vorteilhafter Weise eins Abdichtung des Laderaums, der von dem Außenrahmen zumindest abschnittsweise umgriffen wird.

Ein weiterer Erfindungsaspekt der vorliegenden Erfindung ist ein aus dem erfindungsgemäßen Außenrahmenprofil gebildeter Außenrahmen. Der Au-ßenrahmen umfasst dabei zumindest zwei erfindungsgemäße Außenrahmenprofile die parallel und beabstandet zueinander angeordnet sind. Zwischen den beiden Außenrahmeprofilteilen liegt der Fahrzeugboden des Nutzfahrzeuges in Form von mit den Außenrahmenprofilteilen verbundenen Bodenpaneelen.

Schließlich ist ein weiterer Erfindungsaspekt der vorliegenden Erfindung ein Chassis für einen Nutzfahrzeugaufbau, umfassend zumindest den erfindungsgemäßen Außenrahmen. Der erfindungsgemäße Außenrahmen mit seinem höheren hinteren Bereich und mit seinem niedrigeren vorderen Bereich erlaubt die Ausbildung eines Chassis, wie es für Nutzfahrzeug, insbesondere für Trailer bekannt ist, wobei jedoch erfindungsgemäß das durchlaufende erste Profil, welches auch als Masterprofil bezeichnet werden kann, unterschiedliche Nutzfahrzeugaufbauten zulässt und dieses stufenlos ausgestaltet ist.

Um hier Wiederholungen bezüglich der Vorteile des erfindungsgemäßen Au-ßenrahmens bzw. des erfindungsgemäßen Chassis für einen Nutzfahrzeugaufbau zu vermeiden, wird auf die Beschreibung der vorteilhaften Ausgestaltungen des erfindungsgemäßen Außenrahmenprofils verwiesen und es wird vollumfänglich auf die Offenbarung durch diese Beschreibung zurückgegriffen und umgekehrt.

### Bevorzugte Ausführungsbeispiele:

Weitere, die Erfindung verbessernde Maßnahmen werden nachstehend mit der Beschreibung von bevorzugten Ausführungsbeispielen der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die in den Figuren dargestellten Ausführungsbeispiele nur beschreibenden Charakter haben und diese nicht dazu gedacht ist, die Erfindung in irgendeiner Form einzuschränken.

Es zeigen:
- Fig. 1: eine Schnittzeichnung im Querschnitt durch den hinteren Rahmenabschnitt eines erfindungsgemäßen Außenrahmenprofils mit einem als Kofferaufbau ausgestalteten Nutzfahrzeugaufbau,
- Fig. 2: eine Schnittzeichnung im Querschnitt durch den vorderen Rahmenabschnitt im Bereich des Stoßes zwischen dem zweiten und dem dritten Profilteil mit einem die Profilteile verbindenden Verbindungselement eines erfindungsgemäßen Außenrahmenprofils,
- Fig. 3: das Verbindungselement aus Figur 2 in einer perspektivischen Darstellung,
- Fig. 4: eine Schnittzeichnung im Querschnitt durch das Rahmenprofil des erfindungsgemäßen Außenrahmenprofils mit einem durch das Rahmenprofil greifenden Zurrhaken und einer im Rahmenprofil aufgenommenen Zurröse,
- Fig. 5: die Schnittzeichnung des hinteren Rahmenprofils aus Figur 1 mit einem an dem Rahmen angeordneten Anschlusselement für eine Runge,
- Fig. 6: eine Übersichtsdarstellung des Außenrahmenprofils im hinteren Bereich über einem Fahrzeugrad im Querschnitt durch das Rahmenprofil des erfindungsgemäßen Außenrahmenprofils, bzw. im Querschnitt durch das Chassis eine Nutzfahrzeuges,
- Fig. 7: eine Schnittzeichnung im Querschnitt durch den hinteren Rahmenabschnitt eines erfindungsgemäßen Außenrahmenprofils mit einem am Außenrahmenprofil angeordneten Palettenanschlag und einem Dichtungsprofil,
- Fig. 8: zeigt den hinteren Rahmenabschnitt des erfindungsgemäßen Außenrahmenprofils aus Figur 7 mit einem durch das Außenrahmenprofil geführten Zurrhaken als Schnittzeichnung im Querschnitt durch das Rahmenprofil,
- Fig. 9: zeigt den hinteren Rahmenabschnitt des erfindungsgemäßen Außenrahmenprofils aus Figur 8 mit einer durch das Außenrahmenprofil geführten Zurröse als Schnittzeichnung im Querschnitt durch das Rahmenprofil und
- Fig. 10: zeigt in einer Schnittzeichnung im Querschnitt durch den hinteren Rahmenabschnitt 30 ein erfindungsgemäßes Außenrahmenprofil 1 für einen Außenrahmen für ein Nutzfahrzeug mit Kofferaufbau, bei dem die Ladungssicherung über Zurrösen erfolgt.

In den unterschiedlichen Figuren sind gleiche Teile stets mit denselben Bezugszeichen versehen, weshalb diese in der Regel nur einmal beschrieben werden.

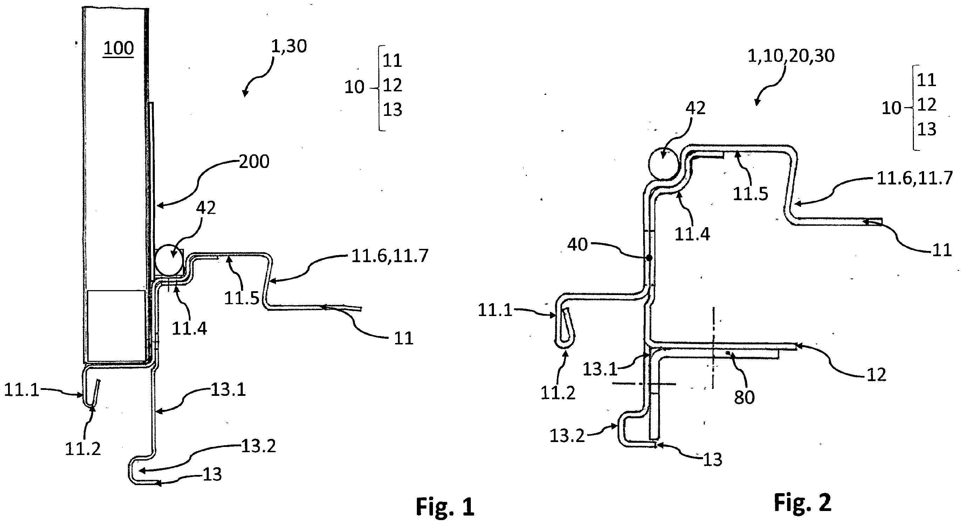

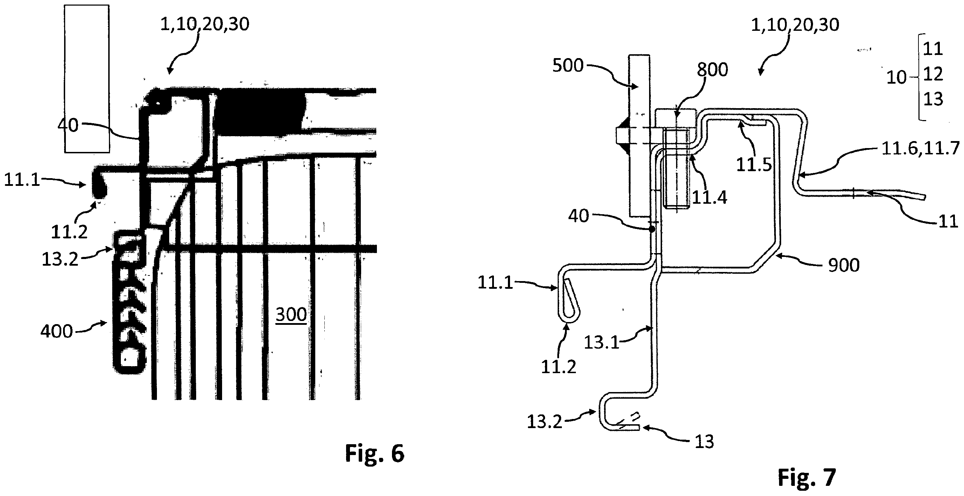

Fig. 1 zeigt eine Schnittzeichnung im Querschnitt durch den hinteren Rahmenabschnitt 30 eines erfindungsgemäßen Außenrahmenprofils 1 für einen Außenrahmen für ein Nutzfahrzeug. Vorliegend ist als Nutzfahrzeugaufbau ein Kofferaufbau dargestellt, der aus einzelnen Kofferwandpaneelen 100 zusammengesetzt werden kann. Die Befestigung der Kofferwandpaneele 100 an dem Außenrahmenprofil 1 kann beispielsweise durch Verkleben oder mittels Befestigungselementen, beispielsweise mittels Toptite-Schrauben, erfolgen. An der zum Boden des Nutzfahrzeuges liegenden Seite des Kofferwandpaneels 100 ist eine Scheuerleiste 200 angesetzt. Das dargestellte Au-ßenrahmenprofil 1 setzt sich vorliegend aus drei Profilteilen 11,12,13 zusammen. Im dargestellten hinteren Rahmenabschnitt 30 wird das Außenrahmenprofil 1 durch das erste Profilteil 11 und durch das dritte Profilteil 13 gebildet. Sowohl das erste Profilteil 11 als auch das dritte Profilteil 13 weisen einen nach unten hin weisenden Schenkel 11.1 und 13.1 auf, an deren Enden jeweils eine Umformung 11.2 und 13.2 ausgebildet ist. Die Umformung 11.2 am Schenkel 11.1 dient neben einer unterseitigen Versteifung des Profilteils 11 und zur Vermeidung der Ausbildung einer scharfen Kante des Profilteils 11 insbesondere zum Umlegen einer Plane um die als Abrundung gebildete Umformung 11.2 und für den Eingriff von Planenspannern. Die Umformung 13.2 am Schenkel 13.1 dient neben einer Stabilisierung bzw. unterseitigen Versteifung des Profilteils 13 und zur Vermeidung der Ausbildung einer scharfen Kante als Befestigungsvorrichtung, beispielsweise durch Verschraubung oder Vernietung, für beispielsweise Seitenbeleuchtung, Spritzschutz, Werkzeugkasten oder Unterfahrschutz, oder zum Durchführen von Leitungen, wie elektrischen oder fluidtechnischen Leitungen dienen. Um im hinteren Fahrzeugbereich ausreichend Platz für die am Fahrzeugchassis angeordneten Räder anbieten zu können, kann der Schenkel 13.1 vorteilhaft nach Außen geformt sein, insbesondere in Form einer Ausbuchtung (s. Detailansicht Figur 6). Die Umformung 13.2 kann jedoch vorteilhaft auch als Klemmbefestigung mit Klemmwirkung durch Zusammendrücken der beiden Schenkel der U-förmigen Umformung 13.2 ausgebildet werden. Abschnittsweise liegt hinter dem Profilteil 11 das Profilteil 13 an und ist dabei der Form des Profilteils 11 derart nachgebildet bzw. nachgeformt, dass sich im Anlagebereich der beiden Profilteile 11 und 13 insgesamt die Wandstärke beider Profilteile addiert. Vorliegend haben das Profilteil 11 und das Profilteil 13 die gleiche Wandstärke, so dass es bezüglich der addierten Wandstärken zu einer Materialdopplung kommt. Die Materialdopplung der Wandstärke durch Anlage des Profilteils 13 an das Profilteil 11 erfolgt vorliegend bis ca. zur Hälfte eines oberen Plateaus 11.5 des Profilteils 11, welches ca. auf der oberen Höhe von Bodenpaneelen abschließt, die den Fahrzeugboden bilden (vorliegend nicht dargestellt). Durch die Materialdopplung bzw. durch die Addition der Wandstärken der Profilteile 11 und 13 wird auch das Plateau 11.5 verstärkt. Je nach Belastung des Plateaus 11.5 oder des Fahrzeugbodens kann die Anlage des Profilteils 13 an das Profilteil 11 auch weiter geführt werden, nämlich in der Figur bis nach rechts zum Ende des Profilteils 11. Insbesondere die Verstärkung im Schulterbereich 11.4 des ersten Profilteils 11 durch die Anformung und die Anlage des zweiten Profilteils 12 und des dritten Profilteils 13 dient der Abstützung des Plateaus 11.5 und der Bodenaufnahme. Dies führt insgesamt zu einer Stabilisierung eines aus den Außenrahmenprofilen 1 gebildeten Außenrahmens, insbesondere bei Belastung, insbesondere Druckbelastung, auf den Fahrzeugboden. Nach rechts in der Figur fällt das Profilteil 11 nach dem Plateau 11.5 in einem nach unten hin weisenden nicht lotrechten Schenkel 11.6 ab. Durch diese Umformung bildet das Profilteil 11 eine Hinterschneidung 11.7 oder einen Hinterschnitt zur Aufnahme von Bodenpaneelen aus. Die in die Hinterschneidung 11.7 eingeführten Bodenpaneele werden vorzugsweise mit dem Profilteil 11 verklebt und bilden insgesamt über die Längserstreckung des Außenrahmens mehrerer an dem erfindungsgemäßen Außenrahmenprofil 1 verklebter Bodenpaneele eine Scheibe, die die Fahreigenschaften des Nutzfahrzeuges verbessert. Durch Zusammenfügen des ersten den Außenrahmen bildenden Außenrahmenprofils 1 nach Einführung und Verklebung der Bodenpaneele in die Hinterschneidung 11.7 des Rahmen- bzw. Profilteils 11 mit dem zweiten den Außenrahmen bildenden Außenrahmenprofil 1, das wie oben beschrieben spiegelsymmetrisch in Längserstreckung des Nutzfahrzeuges und mit Abstand zu dem ersten Außenrahmenprofil 1 angeordnet wird, um den Außenrahmen, der den Fahrzeugboden zumindest abschnittweise umrahmt bzw. umgrenzt, zu bilden, sind die in die Hinterschneidung 11.7 des Profilteils 11 eingesetzten Bodenpanneele durch die die Hinterschneidung 11.7 bildende Umformung des Profilteils 11 bereits zumindest kraft- und/oder formschlüssig mit den beiden Außenrahmenprofilen 1, die den Außenrahmen bilden, verbunden.

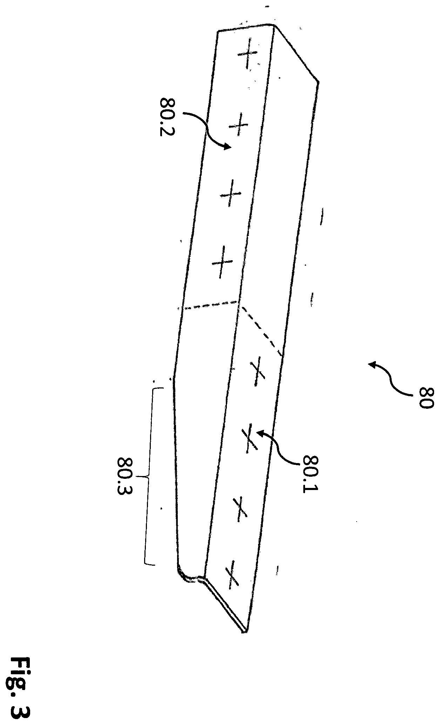

Fig. 2 zeigt eine Schnittzeichnung im Querschnitt durch den vorderen Rahmenabschnitt 20 mit dem dahinterliegenden hinteren Rahmenabschnitt 30 eines erfindungsgemäßen Außenrahmenprofils 1. Das dargestellte Außenrahmenprofil 1 setzt sich vorliegend aus drei Profilteilen 11, 12 und 13 zusammen. In der Darstellung in Figur 2 auf den vorderen Rahmenabschnitt 20 wird das Außenrahmenprofil 1 durch das erste Profilteil 11 und durch ein drittes Profilteil 13 gebildet. Wie in dem dargestellten Verbindungsbereich zwischen dem zweiten Profilteil 12 und dem dritten Profilteil 13 über ein an diese abschnittsweise anliegendes und mit den Profilteilen 12 und 13 verbundenes Verbindungselement 80 in Form eines Verbindungsprofils, das in Figur 3 dargestellt ist, ist zu erkennen, dass das vordere Profilteil 12 eine andere Bauhöhe als das hintere Profilteil 13 aufweist, wodurch unterschiedliche Unterbauhöhen in Längserstreckung des Außenrahmens des Nutzfahrzeuges ausgestaltet sind. Bei dieser Ausgestaltung bleibt die Form und die Bauhöhe das die Außenseite des Außenrahmens bzw. das die Außenseite des Außenrahmenprofils 1 bildende Profilteil 11 über dessen gesamte Längserstreckung gleich, wodurch vorteilhaft eine Stufe bei einem Übergang zwischen dem vorderen Bereich 20 und dem hinteren Bereich 30 des Außenrahmenprofils 1 vermieden wird. In der Schulter 11.4 ist in der Figur 2 eine Zurröse 42 aufgenommen, die zur Ladungssicherung über einen durch die Zurröse 42 geführten Spanngurt oder Zurrriemen dient.

Fig. 3 zeigt das Verbindungselement 80 aus Figur 2 in einer perspektivischen Darstellung parallel zur Längserstreckung des Außenrahmenprofils 1. Das Verbindungselement 80 ist in Form eines Verbindungsprofils mit einer oberen Anlagefläche 80.1 und einer seitlichen Anlagefläche 80.2 ausgestaltet, über die das Verbindungselement 80 mit den Profilteilen 11, 12 und 13 verbunden werden kann. In der Figur rechts im vorderen Bereich des Verbindungselements 80 ist die seitliche Anlagefläche 80.2 abschnittsweise in Form einer Abschrägung 80.3 ausgeklinkt und liegt mit dieser Abschrägung 80.3 bei Verbindung der Profilteile 12 und 13 im Fahrgestellkröpfungsbereich des Nutzfahrzeuges. Kurz hinter der Abschrägung 80.3 überdeckt das Verbindungselement 80 den Außenrahmenprofilestoß zwischen dem Profilteil 12 und dem Profilteil 13.

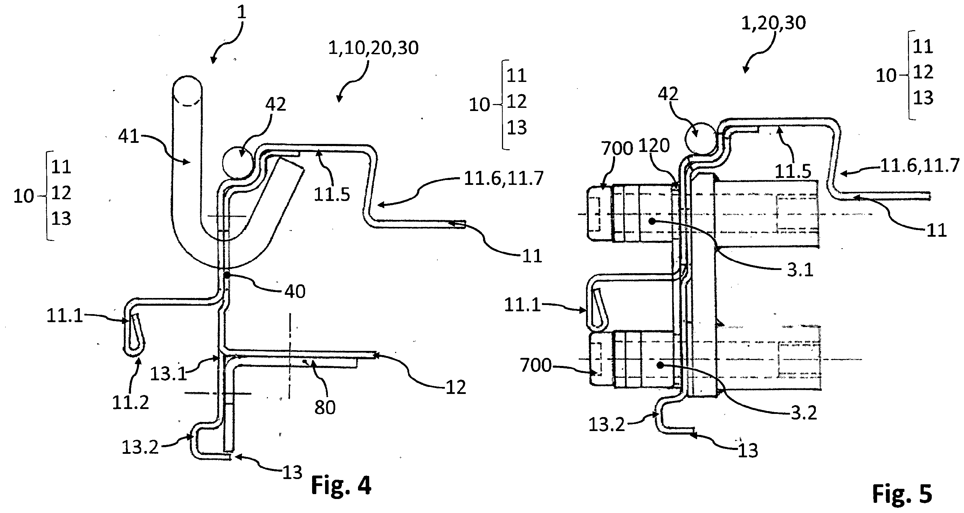

Figur 4 zeigt das in Figur 2 dargestellte Außenrahmenprofil 1 mit einem durch das Rahmenprofil 1 bzw. durch den Außenrahmen durchgreifenden Zurr- bzw. Verzurrhaken 41 und einem in der Schulter 11.4 aufgenommenen Zurröse 42. Der Zurrhaken 41 greift durch einen im Rahmenprofil 1 ausgestalteten Durchgriff 40 in Form einer Öffnung. Die Öffnung ist in einem Bereich der Wand des Rahmenprofils 1 ausgestaltet, welche durch zwei aneinander liegende Profilteile 11 und 12 oder 11 und 13 verstärkt ist, vorliegend ist die Wandstärke verdoppelt.

Figur 5 zeigt das in Figur 1 dargestellte Außenrahmenprofil 1. Im Gegensatz zu dem in Figur 1 einen Kofferaufbau aufnehmenden Außenrahmen, ist das in Figur 4 dargestellte gleiche Außenrahmenprofil 1 für Außenrahmen für einen Nutzfahrzeugaufbau mit Plane, beispielsweise für einen Curtainsider- oder Mega-Curtainsideraufbau ausgebildet. Zur Anbindung von Rungen (hier nicht dargestellt) ist ein aus zwei Anschlusselementen 3.1 und 3.2 gebildetes Anschlusselement 3.1,3.2 mit dem Außenrahmen verbunden.

Im Bereich der Rungen sind in dem Profilteil 11 Ausnehmungen vorgesehen. Die Anschlusselemente 3.1 und 3.2 sind auf einem gemeinsamen Grundträger 120 in Form eines Flacheisens angeordnet und bilden eine modulare Einheit. Die Montage der Anschlusselemente auf dem Grundträger vereinfacht zum einen die Montage von zwei oder mehr Anschlusselementen 3.1,3.2 an dem aus dem erfindungsgemäßen Außenrahmenprofil 1 gebildeten Außenrahmen, und zum anderen wird der Anschlagbereich der Runge an dem Außenrahmen des Chassis des Nutzfahrzeuges verstärkt. Ein weiterer stabilisierender Effekt der durch den Grundträger 120 verstärkten Außenrahmen ist der, dass die durch die Anschlusselemente 3.1 und 3.2 durch deren Durchgangsbohrungen und durchgeführten Befestigungselemente 700, in Form von Dehnschrauben, um die Wandstärke des Grundträgers 120 und durch die Materialdopplung der Wandstärke verlängert werden, was eine zusätzliche Stabilisierung der Befestigung der Runge an dem Außenrahmen bewirkt. Vorteilhaft wird die Runge über ein aus der Deutschen Patentanmeldung 10 2020 102 186.0 bekanntes Verschlusssystem über die Anschlusselemente 3.1 und 3.2 mit dem Außenrahmen verbunden. Auf den Offenbarungsgehalt dieser Patentanmeldung wird hiermit ausdrücklich verwiesen und dieser wird zum Gegenstand der vorliegenden Beschreibung und damit zum Offenbarungsgehalt der vorliegenden Anmeldung gemacht.

In Figur 6 ist in einer Übersichtsdarstellung die Anordnung des Außenrahmenprofils 1 über einem Fahrzeugrad 300 eines Nutzfahrzeuges im Querschnitt durch den hinteren Bereich des Außenrahmenprofils gezeigt. Die Umformung 13.2 ist als Klemmung ausgebildet, in die vorliegend ein Spritzschutz 400 zur Befestigung an dem Außenrahmenprofil 1 geklemmt ist. Um das Fahrzeugrad 300 relativ zum Außenrahmenprofil 1 aufnehmen und ohne Berührung zum Außenrahmenprofil 1 bewegen zu können, ist der Schenkel 13.1 leicht nach Außen (in der Darstellung) nach links verformt, bzw. dieser weist eine Ausbuchtung auf, die einen Freiraum zur Anordnung des Fahrzeugrades 300 ausbildet. Dabei ist vorteilhaft, dass das durchlaufende Profilteil 11 von einer Verformung zur Bildung eines Freiraumes für das Fahrzeugrad 300 bzw. die Fahrzeugräder 300 befreit bleibt.

Figur 7 zeigt in einer Schnittzeichnung im Querschnitt durch den hinteren Rahmenabschnitt ein erfindungsgemäßes Außenrahmenprofil 1. Am Außenrahmenprofil 1 ist ein Palettenanschlag 500 angeordnet, der über ein Befestigungselement 800, welches vorliegend in Form eines Bolzens durch den Palettenanschlag 500 und durch das Außenrahmenprofil 1 im Bereich der Schulter 11.4 geführt ist, an dem Außenrahmenprofil 1 befestigt. Der Palettenanschlag 500 verläuft vorteilhaft parallel in Längserstreckung zu dem Außenrahmenprofil 1 insbesondere vorteilhaft über die gesamte Längserstreckung des Profilteils 11. Um ein Eindringen von Feuchtigkeit über in dem Außenrahmenprofil 1 ausgestalteten Löchern zu verhindern, ist unterhalb des Plateaus zwischen dem Profilteil 11 und dem freien Ende des Profilteils 13 ein Dichtungsprofil 900 geklemmt. Das Dichtungsprofil 900 ist vorteilhaft aus einem Kunststoff oder einem Kunststoffverbundmaterial oder in Form eines Dichtungsbandes ausgebildet, das beispielsweise aus einem kunststoffähnlichem oder einem gummiähnlichem oder einem gummielastischen Material ausgestaltet ist. In unterbrochenen Linien ist die Möglichkeit der Verformung der Umformung 13.2 zu einer Klemmung dargestellt.

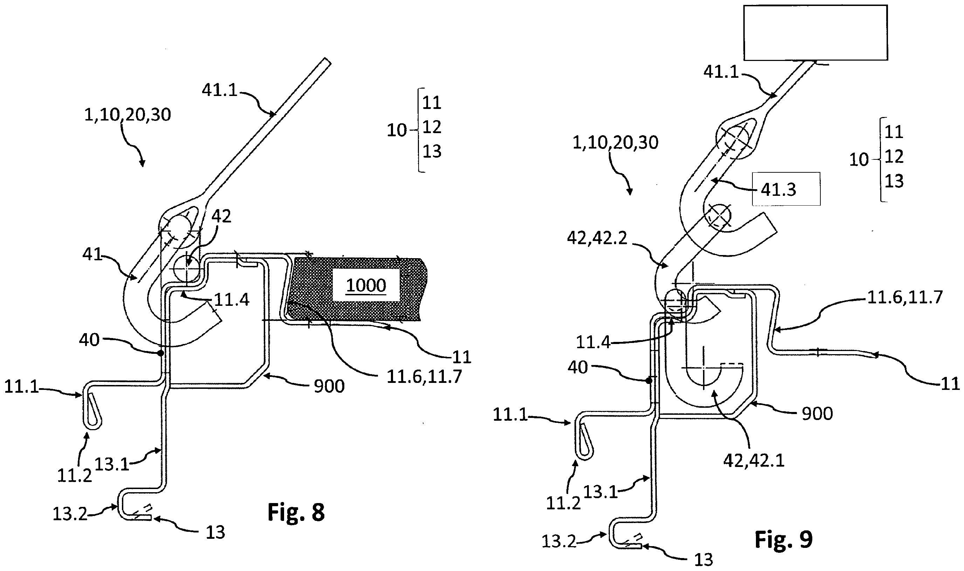

Figur 8 zeigt den hinteren Rahmenabschnitt 30 des erfindungsgemäßen Au-ßenrahmenprofils 1 aus Figur 7 mit einem durch das Außenrahmenprofil 1 geführten Zurrhaken 41 als Schnittzeichnung im Querschnitt durch das Rahmenprofil 10. An dem Zurrhaken 41 ist ein Zurrgurt 41.1 befestigt, der zur Ladungssicherung dient. In die Hinterschneidung 11.7 ist ein Bodenpaneel 1000 eingelegt bzw. mit dem Profilteil 11 verklebt.

Die Figur 9 zeigt den hinteren Rahmenabschnitt 30 des erfindungsgemäßen Außenrahmenprofils 1 aus Figur 8 mit einer durch das Außenrahmenprofil 1 geführten Zurröse 42 als Schnittzeichnung im Querschnitt durch das Rahmenprofil 10. Die Zurröse 42 ist in zwei Stellungen, einer unteren Stellung 42.1 und einer oberen Stellung 42.2 gezeigt. In der unteren Stellung 42.1 befindet sich die Zurröse 21 in dem zwischen dem Dichtungsprofil 900 und dem Außenrahmenprofil 1 gebildeten Raum und ist in dieser Stellung 42.1 zugentlastet. In der unteren Stellung 42.1 ist die Zurröse 42 derart in dem Schulterbereich 11.4 des Außenrahmenprofils 1 aufgenommen, dass die Zurröse 42 den durch das Plateau 11.5 gebildeten oberen Bereich des Außenrahmenprofils 1 nicht übersteigt und wird dadurch bei Belastung des Plateaus 11.5, beispielsweise durch Befahrung mit einem Stapler in der unteren Stellung 42.1 nicht beschädigt. In der dargestellten oberen Stellung 42.2 der Zurröse 42 wird über einen Zurrgut 41.1, der zur Ladungssicherung dient, wobei der Zurrgut 41.1 an einem Haken 41.3 befestigt ist, der in die Zurröse 42 greift, derart Zug auf die Zurröse 42 ausgeübt, dass die Zurröse 42 aus der unteren Stellung 42.1 in die obere Stellung 42.2 geführt wird, die auch als Verzurrstellung bezeichnet werden kann.

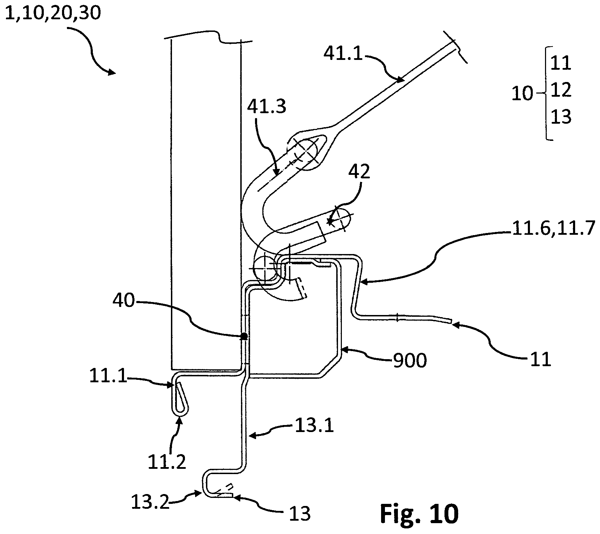

Schließlich zeigt Figur 10 eine Schnittzeichnung im Querschnitt durch den hinteren Rahmenabschnitt 30 eines erfindungsgemäßen Außenrahmenprofils 1 für einen Außenrahmen für ein Nutzfahrzeug. Vorliegend ist als Nutzfahrzeugaufbau ein Kofferaufbau dargestellt, der aus einzelnen Kofferwandpaneelen 100 zusammengesetzt werden kann, wie dieser in Figur 1 dargestellt ist. Die Ladungssicherung erfolgt über eine Zurröse 42, die vorliegend über den Schulterbereich 11.4 in das Außenrahmenprofil 1 eingefädelt wird und beim Einfädeln der Haken 41.3, an dem ein Zurrgut 41.1 befestigt ist, in die Zurröse 42 greift. Im Falle der Ausführung des Nutzfahrzeuges mit Kofferaufbau sind durch die Paneele 100 die Löcher 40 zur Aufnahme der Zurrhaken 41 verdeckt.

## Patentansprüche

1. Außenrahmenprofil (1) für einen Außenrahmen für ein Nutzfahrzeug, insbesondere für ein Chassis eines Nutzfahrzeuges, welches aus wenigstens einem Rahmenprofil (10) aus zumindest drei Profilteilen (11,12,13) mit gleicher oder unterschiedlicher Wandstärke gebildet ist, mit einem ersten Profilteil (11), das zumindest abschnittsweise die Außenseite des Außenrahmenprofils (1) bildet, mit zumindest einem vorderen Rahmenabschnitt (20) und zumindest einem hinteren Rahmenabschnitt (30), wobei an dem vorderen Rahmenabschnitt (20) ein zweites Profilteil (12) mit einer niedrigen Höhe zumindest abschnittweise an dem ersten Profilteil (11) derart anliegt, und wobei an dem hinteren Rahmenabschnitt (30) ein drittes Profilteil (13) mit einer zu dem zweiten Profilteil (12) höheren Aufbauhöhe zumindest abschnittweise an dem ersten Profilteil (11) derart anliegt, dass unterschiedliche Unterbauhöhen in Längserstreckung des Rahmenprofils (10) ausgebildet sind, **dadurch gekennzeichnet, dass** in den Abschnitten, in denen das zweite Profilteil (12) und das dritte Profilteil (13) an dem ersten Profilteil (11) anliegen, sich die Wandstärke des ersten Profilteils (11) mit der Wandstärke des zweiten Profilteils (12) oder der Wandstärke des dritten Profilteils (13) addiert.

2. Außenrahmenprofil (1) nach Anspruch 1, **dadurch gekennzeichnet, dass** bei gleicher Wandstärke für das erste Profilteil (11), das zweite Profilteil (12) und das dritte Profilteil (13) das Rahmenprofil (10) in den Abschnitten, in denen das zweite Profilteil (12) und das dritte Profilteil (13) an dem ersten Profilteil (11) anliegen, eine Materialdopplung erfährt.

3. Außenrahmenprofil (1) nach Anspruch 1 oder 2, **dadurch gekennzeichnet, dass** die erhöhte Wandstärke, insbesondere die Materialdopplung, zumindest in Abschnitten des Rahmenprofils (10) ausgebildet ist, in denen Öffnungen für Befestigungselemente zur Ladungssicherung vorgesehen sind, insbesondere Verzurröffnungen (40) zum Durchgreifen des Rahmenprofils (10) mit Verzurrhaken (41) und/oder Verzurrösen (42).

4. Außenrahmenprofil (1) nach einem der vorherigen Ansprüche, **dadurch gekennzeichnet, dass** die erhöhte Wandstärke zumindest in einem zum Fahrzeugboden (1000) hin liegenden Schulterbereich (11.4) des Rahmenprofils (10) durch Anformung und Anlage des zweiten Profilteils (12) und/oder dritten Profilteils (13) an das erste Profilteil (11) ausgebildet ist, und der verstärkte Schulterbereich (11.4) einer Abstützung eines Plateaus (11.5) und/oder einer Bodenaufnahme (11.7) dient, wodurch ein Abbiegen oder Verbiegen des Rahmenprofils (10) bei Druckbelastung auf den Fahrzeugboden (1000) entgegengewirkt werden kann.

5. Außenrahmenprofil (1) nach Anspruch 3 oder 4, **dadurch gekennzeichnet, dass** der Schulterbereich (11.4) zur Aufnahme von Verzurrösen (11.4) dient, insbesondere die in dem Schulterbereich (11.4) aufgenommenen Verzurrösen (11.4) für eine Ladungssicherung für ein als Kofferaufbau aus Paneelen (100) ausgestaltetes Nutzfahrzeug dient.

6. Außenrahmenprofil (1) nach einem der vorherigen Ansprüche, **dadurch gekennzeichnet, dass** das erste Profilteil (11) in Längserstreckung des Rahmenprofils (10) durchlaufend mit gleicher Höhe stufenlos ausgebildet ist.

7. Außenrahmenprofil (1) nach einem der vorherigen Ansprüche, **dadurch gekennzeichnet, dass** das zweite Profilteil (12) und das dritte Profilteil (13) über zumindest ein Verbindungelement (80), insbesondere welches zumindest abschnittsweise in Längserstreckung des Rahmenprofils (10) an dem zweiten Profilteil (12) und dem dritten Profilteil (13) zur Anlage gebracht werden kann, miteinander verbunden werden können.

8. Außenrahmenprofil (1) nach einem der vorherigen Ansprüche, **dadurch gekennzeichnet, dass** das erste Profilteil (11) zumindest abschnittsweise eine Umformung in Form einer Hinterschneidung (11.7) aufweist, welche zur zumindest kraft- und/oder formschlüssigen Verbindung mit Bodenpaneelen dient.

9. Außenrahmenprofil (1) nach einem der vorherigen Ansprüche, **dadurch gekennzeichnet, dass** das dritte Profilteil (13) eine parallel zur Längserstreckung des Rahmenprofils (10) ausgebildete Umformung (13.2) an einem orthogonal zur Längserstreckung des dritten Profilteils (13) liegenden nach unten weisenden Schenkel (13.1) aufweist, insbesondere in Form einer U-förmigen Verformung.

10. Außenrahmenprofil (1) nach Anspruch 9, **dadurch gekennzeichnet, dass** die Umformung (13.2) zur Befestigung von Anbauteilen mittel Befestigungselementen und/oder zum Durchführen von elektrischen oder fluidtechnischen Leitungen ausgebildet ist und/oder als Klemmung zur Befestigung von Anbauteilen durch Verformung ausgebildet werden kann.

11. Außenrahmenprofil (1) nach einem der vorherigen Ansprüche, **dadurch gekennzeichnet, dass** das erste Profilteil (11) eine parallel zur Längserstreckung des Rahmenprofils (10) ausgebildete Umformung (11.2) an einem orthogonal zur Längserstreckung des ersten Profilteils (11) liegenden nach unten weisenden Schenkel (11.1) aufweist, insbesondere in Form einer nach oben hin sich verjüngenden Öse.

12. Außenrahmenprofil (1) nach Anspruch 11, **dadurch gekennzeichnet, dass** die Umformung (11.1) als Versteifung des ersten Profilteils (11) und/oder zum Umschlaufen einer freien Kante einer Plane und/oder als Widerlager zum Festlegen eines Seitenplanenspanners ausgebildet ist.

13. Außenrahmen, umfassend zumindest zwei Außenrahmenprofile (1) nach einem der vorhergehenden Ansprüche 1 bis 12, wobei die zwei Außenrahmenprofile (1) spiegelsymmetrisch in Längserstreckung und parallel zueinander angeordnet sind.

14. Chassis für einen Nutzfahrzeugaufbau, umfassend zumindest den Außenrahmen nach Anspruch 13, der aus zumindest zwei Außenrahmenprofilen (1) nach einem der vorhergehenden Ansprüche 1 bis 12 ausgestaltet ist.

## Claims

1. Outer frame profile (1) for an outer frame for a commercial vehicle, in particular for a chassis of a commercial vehicle, which is formed from at least one frame profile (10) consisting of at least three profile parts (11, 12, 13) with the same or different wall thicknesses, with a first profile part (11) which forms the outer side of the outer frame profile (1) at least in sections, with at least one front frame section (20) and at least one rear frame section (30), wherein a second profile part (12) with a low height rests against the first profile part (11) in such a way at the front frame section (20) at least in sections, and wherein a third profile part (13) with a higher superstructure height than the second profile part (12) rests against the first profile part (11) at least in sections on the rear frame section (30) in such a way that different substructure heights are formed in the longitudinal extension of the frame profile (10), **characterized in that** in the sections in which the second profile part (12) and the third profile part (13) rest against the first profile part (11), the wall thickness of the first profile part (11) is added to the wall thickness of the second profile part (12) or the wall thickness of the third profile part (13).

2. Outer frame profile (1) according to claim 1, **characterized in that**, with the same wall thickness for the first profile part (11), the second profile part (12) and the third profile part (13), the frame profile (10) undergoes a doubling of material in the sections in which the second profile part (12) and the third profile part (13) bear against the first profile part (11).

3. Outer frame profile (1) according to claim 1 or 2, **characterized in that**, the increased wall thickness, in particular the material doubling, is formed at least in sections of the frame profile (10) in which openings for fastening elements for securing the load are provided, in particular lashing openings (40) for reaching through the frame profile (10) with lashing hooks (41) and/or lashing eyes (42).

4. Outer frame profile (1) according to one of the preceding claims, **characterized in that** the increased wall thickness is formed at least in a shoulder region (11.4) of the frame profile (10) lying towards the vehicle floor (1000) by shaping and abutment of the second profile part (12) and/or third profile part (13) against the first profile part (11), and the reinforced shoulder region (11. 4) serves to support a plateau (11.5) and/or a floor support (11.7), whereby bending or flexing of the frame profile (10) under pressure load on the vehicle floor (1000) can be counteracted.

5. Outer frame profile (1) according to claim 3 or 4, **characterized in that** the shoulder region (11.4) serves to accommodate lashing eyes (11.4), in particular the lashing eyes (11.4) accommodated in the shoulder region (11.4) serve to secure a load for a commercial vehicle designed as a box body made of panels (100).

6. Outer frame profile (1) according to one of the preceding claims, **characterized in that** the first profile part (11) is designed to be continuous in the longitudinal extension of the frame profile (10) with the same height in a stepless manner.

7. Outer frame profile (1) according to one of the preceding claims, **characterized in that** the second profile part (12) and the third profile part (13) can be connected to one another via at least one connecting element (80), in particular which can be brought to bear against the second profile part (12) and the third profile part (13) at least in sections in the longitudinal extension of the frame profile (10).

8. Outer frame profile (1) according to one of the preceding claims, **characterized in that** the first profile part (11) has, at least in sections, a deformation in the form of an undercut (11.7), which serves for at least force-locking and/or form-locking connection with floor panels.

9. Outer frame profile (1) according to one of the preceding claims, **characterized in that** the first profile part (11) has, at least in sections, a deformation in the form of an undercut (11.7), which serves for at least force-locking and/or form-locking connection with floor panels.

10. Outer frame profile (1) according to claim 9, **characterized in that** the shaping (13.2) is designed for fastening attachments by means of fastening elements and/or for passing through electrical or fluidic lines and/or can be designed as a clamp for fastening attachments by deformation.

11. Outer frame profile (1) according to one of the preceding claims, **characterized in that** the first profile part (11) has a deformation (11.2) formed parallel to the longitudinal extent of the frame profile (10) on a downwardly pointing limb (11.1) lying orthogonally to the longitudinal extent of the first profile part (11), in particular in the form of an upwardly tapering eyelet.

12. Outer frame profile (1) according to claim 11, **characterized in that** the shaping (11.1) is designed as a stiffener of the first profile part (11) and/or for looping around a free edge of a tarpaulin and/or as an abutment for fixing a side tarpaulin tensioner.

13. Outer frame, comprising at least two outer frame profiles (1) according to one of the preceding claims 1 to 12, wherein the two outer frame profiles (1) are arranged mirror-symmetrically in longitudinal extension and parallel to each other.

14. Chassis for a commercial vehicle body, comprising at least the outer frame according to claim 13, which is formed from at least two outer frame profiles (1) according to one of the preceding claims 1 to 12.

## Revendications

1. Profilé de cadre extérieur (1) pour un cadre extérieur d'un véhicule utilitaire, en particulier pour un châssis d'un véhicule utilitaire, qui est formé d'au moins un profilé de cadre (10) constitué d'au moins trois parties de profilé (11, 12, 13) ayant une épaisseur de paroi identique ou différente, avec une première partie de profilé (11), qui forme au moins par sections le côté extérieur du profilé de cadre extérieur (1), avec au moins une section de cadre avant (20) et au moins une section de cadre arrière (30), une deuxième partie de profilé (12) ayant une faible hauteur s'appliquant au moins par sections sur la section de cadre avant (20) de telle sorte sur la première partie de profilé (11), et une troisième partie de profilé (13) ayant une hauteur de construction plus élevée que la deuxième partie de profilé (12) s'appuyant au moins par sections sur la première partie de profilé (11) sur la section de cadre arrière (30) de telle sorte que des hauteurs de soubassement différentes sont formées dans l'extension longitudinale du profilé de cadre (10), **caractérisé en ce que** dans les sections dans lesquelles la deuxième partie de profilé (12) et la troisième partie de profilé (13) s'appliquent contre la première partie de profilé (11), l'épaisseur de paroi de la première partie de profilé (11) s'additionne à l'épaisseur de paroi de la deuxième partie de profilé (12) ou à l'épaisseur de paroi de la troisième partie de profilé (13).

2. Profilé de cadre extérieur (1) selon la revendication 1, **caractérisé en ce que**, pour une épaisseur de paroi identique pour la première partie de profilé (11), la deuxième partie de profilé (12) et la troisième partie de profilé (13), le profilé de cadre (10) subit un doublage de matériau dans les sections dans lesquelles la deuxième partie de profilé (12) et la troisième partie de profilé (13) s'appliquent contre la première partie de profilé (11).

3. Profilé de cadre extérieur (1) selon la revendication 1 ou 2, **caractérisé en ce que** l'épaisseur de paroi accrue, en particulier le doublement du matériau, est réalisé au moins dans des sections du profilé de cadre (10) dans lesquelles sont prévues des ouvertures pour des éléments de fixation pour la sécurisation du chargement, en particulier des ouvertures d'arrimage (40) pour traverser le profilé de cadre (10) avec des crochets d'arrimage (41) et/ou des oeillets d'arrimage (42).

4. Profilé de cadre extérieur (1) selon l'une des revendications précédentes, **caractérisé en ce que** l'épaisseur de paroi accrue est réalisée au moins dans une zone d'épaulement (11.4) du profilé de cadre (10) située vers le plancher du véhicule (1000) par moulage et application de la deuxième partie de profilé (12) et/ou de la troisième partie de profilé (13) contre la première partie de profilé (11), et la zone d'épaulement renforcée (11. 4) sert à supporter un plateau (11.5) et/ou un réceptacle de sol (11.7 ), ce qui empêche le profil de cadre (10) de se plier ou de se plier sous une charge de pression sur le plancher du véhicule (1000).

5. Profilé de cadre extérieur (1) selon la revendication 3 ou 4, **caractérisé en ce que** la zone d'épaulement (11.4) sert à recevoir des oeillets d'arrimage (11.4), en particulier les oeillets d'arrimage (11.4) reçus dans la zone d'épaulement (11.4) servent à une sécurisation de chargement pour un véhicule utilitaire conçu comme une caisse de panneaux (100).

6. Profilé de cadre extérieur (1) selon l'une des revendications précédentes, **caractérisé en ce que** la première partie de profilé (11) est réalisée de manière continue avec la même hauteur dans l'extension longitudinale du profilé de cadre (10).

7. Profilé de cadre extérieur (1) selon l'une des revendications précédentes, **caractérisé en ce que** la deuxième partie de profilé (12) et la troisième partie de profilé (13) peuvent être reliées l'une à l'autre par au moins un élément de liaison (80), en particulier qui peut être amené en appui sur la deuxième partie de profilé (12) et la troisième partie de profilé (13) au moins par sections dans l'extension longitudinale du profilé de cadre (10).

8. Profilé de cadre extérieur (1) selon l'une des revendications précédentes, **caractérisé en ce que** la première partie de profilé (11) présente au moins par sections une déformation sous la forme d'une contre-dépouille (11.7), qui sert à la liaison au moins par adhérence et/ou par complémentarité de forme avec des panneaux de sol.

9. Profilé de cadre extérieur (1) selon l'une des revendications précédentes, **caractérisé en ce que** la troisième partie de profilé (13) présente une déformation (13.2) réalisée parallèlement à l'extension longitudinale du profilé de cadre (10) sur une branche (13.1) orientée vers le bas et située orthogonalement à l'extension longitudinale de la troisième partie de profilé (13), en particulier sous la forme d'une déformation en forme de U.

10. Profilé de cadre extérieur (1) selon la revendication 9, **caractérisé en ce que** la déformation (13.2) est conçue pour la fixation de pièces rapportées au moyen d'éléments de fixation et/ou pour le passage de lignes électriques ou fluidiques et/ou peut être conçue comme un serrage pour la fixation de pièces rapportées par déformation.

11. Profilé de cadre extérieur (1) selon l'une des revendications précédentes, **caractérisé en ce que** la première partie de profilé (11) présente une déformation (11.2) réalisée parallèlement à l'extension longitudinale du profilé de cadre (10) sur une branche (11.1) orientée vers le bas et située orthogonalement à l'extension longitudinale de la première partie de profilé (11), en particulier sous la forme d'un oeillet se rétrécissant vers le haut..

12. Profilé de cadre extérieur (1) selon la revendication 11, **caractérisé en ce que** la déformation (11.1) est conçue comme un renforcement de la première partie de profilé (11) et/ou pour enrouler un bord libre d'une bâche et/ou comme une butée pour fixer un tendeur de bâche latérale.

13. Cadre extérieur comprenant au moins deux profilés de cadre extérieur (1) selon l'une des revendications 1 à 12 précédentes, dans lequel les deux profilés de cadre extérieur (1) sont disposés de manière symétrique dans le sens de l'extension longitudinale et parallèlement l'un à l'autre.

14. Châssis pour une carrosserie de véhicule utilitaire, comprenant au moins le cadre extérieur selon la revendication 13, qui est formé d'au moins deux profilés de cadre extérieur (1) selon l'une des revendications 1 à 12 précédentes.
